# EUROPÄISCHE PATENTANMELDUNG

(11) **EP 3 015 354 A1**
(43) Veröffentlichungstag der Anmeldung: **04.05.2016**
(21) Anmeldenummer: 15002903.1
(22) Anmeldetag: 12.10.2015
(51) Int. Cl.: B62M 6/55

(54) **GETRIEBEANORDNUNG FÜR EINEN AN EINEM RAHMEN EINES MITTELS TRETKURBEL ANGETRIEBENEN FAHRZEUGS ANBAUBAREN HILFSANTRIEB**

(30) Priorität: 17.10.2014 DE 102014015318
(71) Anmelder: Drive & Innovation GmbH & Co. KG, 90471 Nürnberg (DE)
(72) Erfinder: Nagler, Philipp, 91207 Lauf a.d. Pegnitz (DE)
(74) Vertreter: Liebl, Thomas

(57) **Zusammenfassung**

Getriebeanordnung für einen an einen Rahmen eines mittels Tretkurbel angetriebenen Fahrzeugs anbaubaren Hilfsantrieb, wobei der Hilfsantrieb wenigstens aus der Getriebeanordnung (1, 201) und einem Motor besteht und wobei die Abtriebsseite der Getriebeanordnung (1, 201) auf die Tretlagerwelle (12) des Fahrzeugs wirkt und wenigstens die Getriebeanordnung (1, 201) am Rahmen des Fahrzeugs befestigbar ist. Es wird vorgeschlagen, die Getriebeanordnung (1, 201) derart auszubilden, dass zur Anpassung des Hilfsantriebs an unterschiedliche Rahmen der Abstand zwischen Abtriebsseite (19, 219) und Antriebsseite (18, 218) veränderbar ist, wobei im Endmontagezustand der Abstand zwischen Abtriebsseite (19, 219) und Antriebsseite (18, 218) fixierbar ist.

## Beschreibung

Gegenstand der Erfindung ist eine Getriebeanordnung für einen an einen Rahmen eines mittels Tretkurbel angetriebenen Fahrzeugs anbaubaren Hilfsantrieb, wobei der Hilfsantrieb wenigstens aus der Getriebeanordnung und einem Motor besteht und wobei die Abtriebsseite der Getriebeanordnung auf die Tretlagerwelle des Fahrzeugs wirkt und wenigstens die Getriebeanordnung am Rahmen des Fahrzeugs befestigbar ist.

In der jüngeren Vergangenheit wurden zunehmend Hilfsantriebe für Fahrräder und ähnliche mittels Muskelkraft über Pedale angetriebene Fahrzeuge marktverfügbar. Diese Hilfsantriebe verfolgen dabei unterschiedliche Antriebskonzepte. Neben Radnabenmotoren sind in eine Antriebskette eingreifende Anordnungen bekannt. Andere Konzepte sehen am Hinterrad über eine zusätzliche Kette, einem Riemen oder einer Kardanwelle angreifende Antriebe vor. Als Hilfsantriebe mit den meisten Vorteilen haben sich allerdings solche herauskristallisiert, die das von einem Motor, zumeist einem akkugetriebenen Elektromotor gelieferte zusätzliche Drehmoment direkt am Tretlager in den Antriebsstrang einspeisen, weil hierbei die zum Beispiel an Fahrrädern ohnehin vorgesehene Gangschaltung ohne Einschränkung auch für den Hilfsantrieb genutzt werden kann. Durchgesetzt hat sich dieses vorteilhafte Konzept allerdings in erster Linie bei sogenannten Pedelecs, die bereits fabrikmäßig mit einer Antriebseinheit ausgerüstet sind, die das Tretlager mit Getriebe und Motor mit umfasst, wobei diese Komponenten baulich aufeinander abgestimmt sind. Ein solches Konzept ist beispielsweise in der DE 697 29 611 T2 beschrieben. Die dort gezeigte Antriebseinheit speist ein zusätzliches Drehmoment, das ein akkugetriebener Elektromotor liefert, über eine Untersetzung und ein auf der Tretkurbel angeordnetes Getrieberad in die Tretlagerwelle ein. Das Antriebskonzept wird als integrierter Teil des Rahmens ausgelegt, nicht als Kompaktlösung zum Anschrauben an den Rahmen.

Nachrüstlösungen für das Einspeisen des zusätzlichen Drehmomentes direkt in die Tretlagerwelle wurden ebenfalls bereits vorgestellt. So sind zum Beispiel aus der DE 30 18 333 A1 Antriebsvorrichtungen bekannt geworden, die im Sattelrohr angeordnet sind. Derartige im Sattelrohr zu verbauende Antriebe, aber auch andere Lösungen, stellen konstruktionsbedingt bestimmte Anforderungen an den Rahmenaufbau. Diese Bedingungen werden aber von handelsüblichen Fahrrädern oft nicht erfüllt, weil heute völlig unterschiedlich ausgestaltete Rahmen die Regel sind. Wenn sich unter diesen Umständen ein im Handel erhältlicher nachrüstbarer Hilfsantrieb überhaupt an einem Rahmen anbringen lässt, ist fast immer eine Anpassung notwendig, die entweder erhebliche Umbauten am Fahrrad erfordert oder eine individuelle Anpassung des Hilfsantriebs an den jeweiligen Rahmen notwendig macht. Beide Varianten finden nur geringe Akzeptanz im Markt.

Weiter ist aus der DE 20 2008 001 881 U1 eine Hilfskraftvorrichtung für ein Fahrrad beschrieben. Wie bei Fahrrädern üblich, ist ein Kettentrieb bestehend aus einem vorderen Kettenrad und einem hinteren Kettenrad vorgesehen. Auf das vordere Kettenrad wirkt bei Einspeisung einer Pedalkraft eine Tretlagerwelle über eine erste Trägheitskupplung. Die Einspeisung einer motorischen Hilfskraft erfolgt mittels eines Motors über ein Reduzierungsgetriebe. Das Ausgangsrad des Reduzierungsgetriebes ist über eine Kette mit einem Kettenrad wirkverbunden, das über eine zweite Trägheitskupplung auf eine als Hohlwelle ausgebildete Hilfskraftwelle wirkt. Die Hilfskraftwelle ihrerseits ist fest mit dem vorderen Kettenrad verbunden und drehbar im Tretlagergehäuse gelagert. Die Tretlagerwelle ist drehbar in der Hilfskraftwelle aufgenommen. Eine Anpassbarkeit an unterschiedliche Rahmengeometrien ist bei der starr ausgeführten Anordnung nicht möglich, weiter wird ein speziell ausgebildetes Tretlager und ein speziell ausgebildetes vorderes Kettenrad benötigt.

Es ist daher Aufgabe der Erfindung, das Getriebe eines Hilfsantriebs so auszubilden, dass sich der Hilfsantrieb im Wesentlichen ohne Umbauten und mit nur geringem Anpassungsaufwand an Rahmen und Hilfsantrieb, nahezu an jedes über ein Tretlager pedalangetriebenes Fahrzeug anbringen lässt.

Gelöst wird die Aufgabe durch die kennzeichnenden Merkmale des Hauptanspruchs, vorteilhafte Ausgestaltungen sind in den abhängigen Ansprüchen gekennzeichnet.

Zur Lösung der Aufgabe wurde gefunden, dass einerseits der Angriffspunkt des Getriebes am Tretlager immer gleich zu wählen ist und das Getriebe so auszugestalten ist, dass es unterschiedliche Entfernungen überbrücken kann. Auf diese Weise ist der Befestigungspunkt am Rahmen und mit ihm der Anbringungsort des Hilfsantriebes in einem weiten Bereich wählbar, so dass sich eine Anpassung an nahezu jede Rahmengeometrie bewerkstelligen lässt. Die Getriebeanordnung ist demnach vorteilhaft derart ausgebildet, dass der Abstand zwischen Abtriebsseite und Antriebsseite veränderbar ist wobei im Endmontagezustand der Abstand zwischen Abtriebsseite und Antriebsseite fixierbar ist.

Eine vorteilhafte erste Weiterbildung des Erfindungsgegenstandes sieht vor, dass die Getriebeanordnung aus wenigstens zwei Teilgetrieben besteht und wenigstens eine Zwischenradanordnung aufweist, wobei die Zwischenradanordnung aus wenigstens einem Zwischenrad besteht und jeweils zwei Teilgetriebe direkt oder über Triebmittel, wie Triebketten, Zahnriemen oder Keilriemen wirkverbindet. Dabei ist die Drehachse wenigstens eines Zwischenrades als Schwenkachse ausgebildet, um die wenigstens eines der Teilgetriebe verschwenkbar ist. Das Verschwenken des wenigstens einen Teilgetriebes um die Schwenkachse erfolgt dabei so, dass sich durch das Verschwenken der Abstand zwischen der Abtriebsseite und der Antriebsseite der Getriebeanordnung verändert, so dass durch die Wahl eines entsprechenden Abstandes ein Punkt am Rahmen gefunden werden kann, an dem sich die Antriebsseite der Getriebeanordnung befestigen lässt. Im Endmontagezustand ist das wenigstens eine verschwenkbare Teilgetriebe in seiner Position relativ zur Schwenkachse und damit relativ zur übrigen Getriebeanordnung fixierbar. Dabei muss die Fixierung nicht zwangsläufig an der Schwenkachse selbst erfolgen, es können vielmehr die Teilgetriebe alternativ oder zusätzlich am Rahmen fixiert sein, so dass die Schwenkachse indirekt fixiert ist.

Die Antriebsseite der Getriebeanordnung ist, wie bei derartigen Hilfsantrieben üblich, mit einem Motor, vorzugsweise einem Elektromotor verbindbar. Bei der Getriebeanordnung kann es sich vorteilhaft um einen Rädertrieb, einen Kettentrieb, einen Riementrieb oder eine beliebige Mischform aus diesen Getriebearten handeln.

In weiterer Ausgestaltung ist es vorteilhaft, dass das wenigstens eine verschwenkbare Teilgetriebe auf einem Träger angeordnet ist, der um die Schwenkachse verschwenkbar und in seinem Endmontagezustand relativ zu dieser direkt oder indirekt fixierbar ist.

Von besonderem Vorteil ist es, das wenigstens eine verschwenkbare Teilgetriebe in einem gegenüber dem übrigen Getriebe um die Schwenkachse verschwenkbaren Teilgehäuse anzuordnen. Durch Verschwenken des Teilgehäuses zusammen mit dem Teilgetriebe lässt sich die vormontierte Getriebeanordnung so verändern, dass sich ein bestimmter gewünschter Abstand zwischen deren Antriebsseite und deren Abtriebsseite ergibt. Ist das Teilgehäuse so ausgebildet, dass es durch Hintergreifen entsprechender Gegenstücke an der übrigen Getriebeanordnung zwangsgeführt ist und nur diese Schwenkbewegung zulässt, kann auf eine Fixierung relativ zur Schwenkachse verzichtet werden, da die Getriebeanordnung zwischen den Befestigungspunkten am Rahmen und am Tretlager eingespannt ist. Fehlt diese Zwangsführung, ist es notwendig, das Teilgetriebe in seinem Endmontagezustand auf andere Weise relativ zur Schwenkachse zu fixieren. Das Unterbringen des verschwenkbaren Teilgetriebes in einem eigenen Gehäuse eröffnet vorteilhaft die Möglichkeit, das Verschwenken ohne Eingriff am Getriebe vorzunehmen, so dass ein korrektes Einstellen und Anbringen am Rahmen auch von Laien durchführbar ist.

Besonders einfach und damit vorteilhaft gestaltet sich die Montage, wenn wenigstens ein zweites Teilgehäuse vorgesehen ist, wobei das zweite Teilgehäuse wenigstens einen Teil der Zwischenradanordnung aufnimmt. Die beiden Teilgehäuse können dabei durch Hintergreifen entsprechender Gegenstücke an den Teilgehäusen zueinander zwangsgeführt sein und/ oder mittels Spannmittel zueinander fixiert werden.

Das Fixieren zueinander kann dabei durch Formschluss oder durch Kraftschluss erfolgen. Als formschlüssige Fixierung bietet sich vorteilhaft eine Hirth-Verzahnung an. Diese kann beispielsweise durch zwei stirnverzahnte Ringe gebildet sein, wobei diese form- oder kraftschlüssig in den Teilgehäusen angeordnet sind, derart, dass die Stirnverzahnungen im montierten Zustand ineinander greifen.

Eine weitere vorteilhafte Möglichkeit eine formschlüssige Verbindung zwischen den Teilgehäusen herzustellen besteht darin, wenigstens ein Teilgehäuse mit einem Belag zu versehen, in den Hartkörper eingebettet sind, die beim Verspannen der beiden Teilgehäuse jeweils in das Gehäusematerial beider Gehäusehälften eindringen. Selbstverständlich erfüllt auch eine Zwischenlage mit darin oder daran angeordneten Hartkörpern diesen Zweck. Anstelle der Hartkörper können natürlich auch Hartmetallzwischenlagen wie zum Beispiel gezahnte Hartmetallringe verwendet werden, wobei diese beim Verspannen jeweils in das Material der Teilgehäuse eindringen und Formschluss herbeiführen.

Für eine kraftschlüssige Fixierung bietet es sich vorteilhaft an, wenigstens ein Teilgehäuse mit einem koaxial zur Schwenkachse an den Teilgehäusen angeordneten, den Reibkoeffizienten erhöhenden Belag auszustatten oder eine entsprechende Zwischenlage zwischen den Teilgehäusen vorzusehen. Durch entsprechende Spannmittel lassen sich dann die Teilgehäuse kraftschlüssig miteinander verspannen. Eine ausreichende kraftschlüssige Verbindung kann aber auch bereits durch die Haftreibung der beiden zu fixierenden Teilgehäuse in Folge des Verspannens gegeben sein.

Von besonderem Vorteil ist es, die Getriebeanordnung so auszubilden, dass diese aus zwei Teilgetrieben besteht die durch eine Zwischenradanordnung kraftschlüssig verbunden sind, wobei die Zwischenradanordnung zwei Zwischenräder enthält, die jeweils mit einem der Teilgetriebe direkt oder über Triebmittel wie Triebketten, Zahnriemen oder Keilriemen zusammenwirken. Als Triebmittel ist die Verwendung einer Triebkette in Form einer konventionellen Fahrradkette von besonderem Vorteil. In diesem Fall sind die Zwischenräder und gegebenenfalls weitere Getrieberäder als Kettenräder ausgeführt. Die Drehachse der zwei Zwischenräder ist jeweils als Schwenkachse ausgebildet, um die die Teilgetriebe verschwenkbar sind. Dabei dient die erste Schwenkachse dazu, den Abstand zwischen der Abtriebsseite der Getriebeanordnung und der zweiten Drehachse einzustellen, während die zweite Schwenkachse die Aufgabe hat, die Winkellage der Antriebsseite der Getriebeanordnung einzustellen. Die Einstellung der Winkellage der Antriebsseite der Getriebeanordnung dient dem Zweck, den Antriebsmotor, der auf die Antriebsseite der Getriebeanordnung wirkt, in einer gewünschten Ausrichtung zum Rahmen anzubringen, so dass zum Beispiel die Ausrichtung seiner Drehachse mit der Längsachse eines Rahmenrohrs fluchtet.

Natürlich ist es auch bei dieser dreiteiligen Getriebeanordnung vorteilhaft, dass jedem der zwei Teilgetriebe ein eigenes Teilgehäuse zugeordnet ist und zumindest ein Teil der Zwischenradanordnung sich in einem dazwischen angeordneten dritten Teilgehäuse befindet.

Weiter ist es von Vorteil, zumindest das Teilgehäuse der Antriebsseite direkt oder indirekt an dem Rahmen des Fahrzeugs zu fixieren, weil dadurch einerseits der Punkt für die Einkopplung der Antriebskraft so am Rahmen fixiert ist, dass eventuell auftretende Momente direkt in den Rahmen eingeleitet werden können. Andererseits wird die Getriebeanordnung relativ zum Tretlager des Fahrzeugs fixiert und ist so an seinen beiden gegenüberliegenden Enden eingespannt.

Zur Befestigung der Abtriebsseite der Getriebeanordnung ist es vorteilhaft, einen Adapter vorzusehen, der einerseits an Stelle einer Tretkurbel am Tretlager des Fahrzeugs befestigbar ist und der andererseits so ausgebildet ist, dass eine Tretkurbel mit ihrer Drehachse koaxial zur Drehachse des Tretlagers an dem Adapter befestigbar ist. Auf diese Weise wird die Getriebeanordnung über die Tretlagerwelle, die mit Ausnahme ihrer Rotationsbewegung rahmenstarr verbaut ist, indirekt am Rahmen festgelegt.

Um einen Antriebsmotor zum Beispiel einen akkugespeisten Elektromotor platzsparend anbringen zu können, ist es von Vorteil, die Antriebsseite der Getriebeanordnung als Winkeltrieb auszubilden, derart, dass der Winkeltrieb die Rotationsachse um einen vorgegebenen Winkel, vorzugsweise um 90° dreht. Auf diese Weise lässt sich ein zum Beispiel mit einem Stirnflansch versehener Elektromotor, ein entsprechendes getriebeseitiges Gegenstück vorausgesetzt, direkt mit der Getriebeanordnung koppeln und platzsparend parallel zu einem Rahmenrohr anordnen. Der Winkeltrieb ist dabei vorteilhaft als untersetzendes Kegelradgetriebe mit wenigstens einem Ritzel und einem Tellerrad ausgeführt.

Eine besonders einfache und damit vorteilhafte Möglichkeit eine Getriebeanordnung der vorstehenden Art zu realisieren besteht darin, dass wenigstens eine Zwischenrad auf einer im Gehäuse der Getriebeanordnung gelagerten Hohlwelle oder Hohlachse anzuordnen und ein Spannmittel vorzusehen, das axial zur Hohlwelle oder Hohlachse wirkt. Dazu kann ein sich durch die Hohlwelle oder Hohlachse erstreckendes Spannmittel vorgesehen sein, mittels dem jeweils zwei Teilgehäuse relativ zueinander festlegbar sind. Natürlich besteht auch die Möglichkeit ein Spannmittel zu verwenden, das sich nicht durch die Hohlwelle oder Hohlachse erstreckt, sondern das Gehäuse im Bereich der Stirnseiten der Hohlwelle oder Hohlachse zangenartig umgreift.

Nachdem der Angriffspunkt der Abtriebsseite der Getriebeanordnung am Tretlager und der Befestigungspunkt der Getriebeanordnung am Rahmen normalerweise nicht in einer Ebene liegen, ist es von besonderem Vorteil, die Getriebeanordnung wenigstens zweispurig auszuführen, wobei die Antriebsseite in einer ersten Spur und die Abtriebsseite in einer zweiten, von der ersten unterschiedlichen Spur angeordnet ist. Auf diese Weise lässt sich der Abstand zwischen den Ebenen durch die Getriebeanordnung selbst überbrücken. Dadurch dass üblicherweise genormte Tretlager insbesondere in Fahrrädern verbaut sind, ist der zu überbrückende Abstand von Tretlageraußenseite zu Rahmenmitte bei den meisten Fahrzeugen der hier in Rede stehenden Art gleich.

Zur Überbrückung des Abstandes ist es von besonderem Vorteil, die Zwischenradanordnung zweispurig auszubilden, sodass dieses den Übergang von einer ersten Spur in eine zweite Spur bewirkt. Dabei kann vorgesehen sein, ein Zwischenrad als Doppelrad auszubilden, besonders vorteilhaft als Doppelrad mit Übersetzungsfunktion. Dabei kann das Doppelrad jeweils ein Rad einer ersten Getriebeart und ein Rad einer zweiten Getriebeart aufweisen. Dabei ist es weiter von besonderem Vorteil, dass das eine Rad ein Zahnrad und das andere Rad ein Kettenrad oder ein Zahnriemenrad ist.

Eine Getriebeanordnung bestehend aus wenigstens zwei Teilgehäusen vorausgesetzt, ist es ebenfalls besonders vorteilhaft, auch die Gehäuse entsprechend der Spuren so gestuft zueinander anzuordnen, dass die eingehauste Getriebeanordnung den Abstand zwischen dem Angriffspunkt des Getriebes am Tretlager und dem Befestigungspunkt der Antriebsseite des Getriebes am Rahmen des Fahrzeugs überbrückt.

Hilfsantriebe der vorstehend beschriebenen Art sind zwangsweise mit einem Freilauf ausgestattet, der den Hilfsantrieb von dem Pedalantrieb entkoppelt, also als Überholkupplung wirkt. Bei der erfindungsgemäßen Getriebeanordnung ist es von besonderem Vorteil, diesen Freilauf in der Zwischenradanordnung, bevorzugt in einem Zwischenrad, besonders bevorzugt in einem Zwischenrad, das als Doppelrad ausgebildet ist anzuordnen, weil so nahezu kein Reibmoment der Getriebeanordnung überwunden werden muss, wenn der Antrieb per Pedalbetätigung erfolgt, also die Umdrehungszahl, die die hilfsangetriebene Getriebeanordnung auf die Tretlagerwelle liefert, von der Drehzahl des Pedalantriebs überholt wird.

Die erfindungsgemäße Getriebeanordnung lässt sich sowohl als Erstausrüstung an einem Fahrzeugrahmen verbauen, als auch als Nachrüsteinheit. Dabei ist es von besonderem Vorteil, die Getriebeanordnung, beziehungsweise den Hilfsantrieb dessen Bestandteil sie ist, als Nachrüstsatz auszuführen, da das Getriebekonzept eine breite Palette von Fahrzeugrahmen insbesondere Fahrradrahmen abdeckt.

Das Getriebekonzept zeichnet sich weiter dadurch aus, dass trotz Veränderbarkeit des Abstandes zwischen Antriebsseite und Abtriebsseite der Getriebeanordnung, der Abstand, insbesondere der Achsabstand unmittelbar wirkverbundener Getriebeglieder unverändert bleibt. So ist einerseits gewährleistet, dass das Getriebespiel bei Zahnradpaarungen, beziehungsweise die Ketten- oder Zahnriemenspannung bei Kettentrieben oder Zahnriementrieben unabhängig von dem eingestellten Abstand zwischen Antriebsseite und Abtriebsseite erhalten bleiben. Andererseits lässt sich durch diesen Umstand, die Getriebeanordnung und mit ihr der Hilfsantrieb von Laien als Nachrüstsatz montieren, wobei Eingriffe in das Getriebe entfallen.

Weitere Ausgestaltungen und Vorteile der Erfindung werden nachfolgend anhand der Zeichnung näher erläutert, es zeigen:
- Fig. 1: Eine erste perspektivische Darstellung einer Getriebeanordnung an einem Rahmen in Teildarstellung
- Fig. 2: Eine zweite perspektivische Darstellung einer Getriebeanordnung an einem Rahmen in Teildarstellung in einer ersten Schnittebene längs geschnitten
- Fig. 3: Die Darstellung aus Figur 2 in einer zweiten Schnittebene längs geschnitten
- Fig. 4: Eine dritte perspektivische Darstellung einer Getriebeanordnung an einem Rahmen in Teildarstellung in einer dritten Schnittebene senkrecht zur ersten und zweiten Schnittebene längs geschnitten
- Fig. 5a: Eine Draufsicht auf die dritte Schnittebene gemäß der Darstellung in Fig. 4
- Fig. 5b: Draufsicht und Schnittdarstellung einer Getriebeanordnung mit einem Kettentrieb als Triebstrang
- Fig. 6: Eine Draufsicht auf eine Getriebeanordnung in einer ersten Montageposition an einer ersten Rahmenanordnung in Teildarstellung
- Fig. 7: Die Darstellung aus Figur 6 in der Rückansicht
- Fig. 8: Eine Draufsicht auf eine Getriebeanordnung in einer zweiten Montageposition an der ersten Rahmenanordnung in Teildarstellung
- Fig. 9: Eine Draufsicht auf eine Getriebeanordnung in einer dritten Montageposition an einer zweiten Rahmenanordnung in Teildarstellung
- Fig. 10: Eine Draufsicht auf eine Getriebeanordnung in einer vierten Montageposition an einer dritten Rahmenanordnung in Teildarstellung

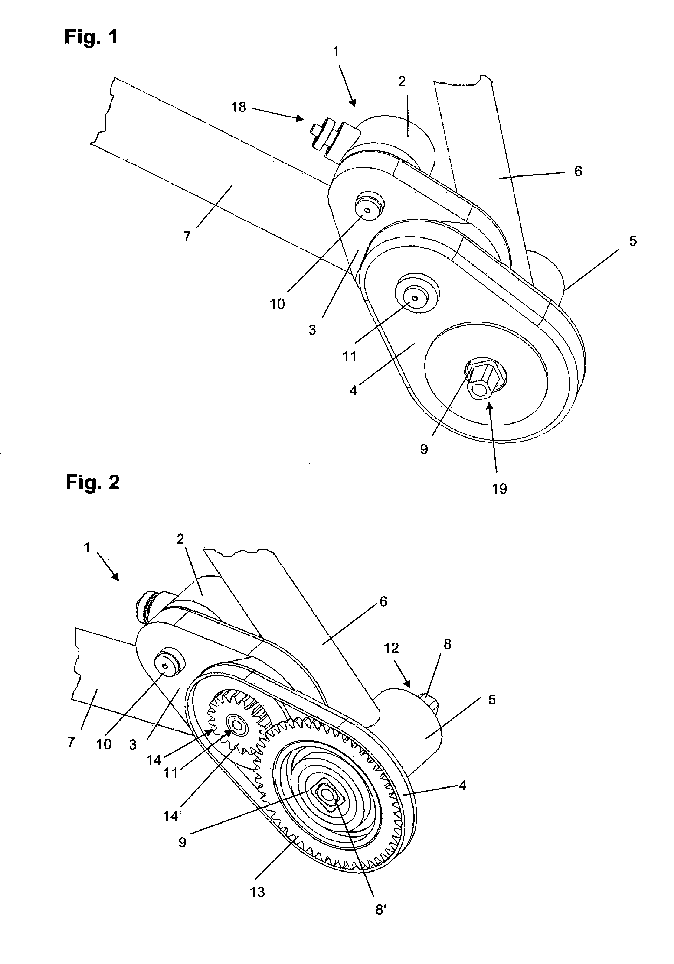

Unter Zuhilfenahme der Fig. 1 und der Fig. 2 soll zunächst ein Beispiel für die erfindungsgemäße Getriebeanordnung, was deren Gehäuse und deren Anordnung an einem Fahrradrahmen angeht, näher erläutert werden. Fig. 1 zeigt dabei eine erste perspektivische Darstellung der eingehausten Getriebeanordnung an einem Rahmen in Teildarstellung, während Fig. 2 die gleiche Anordnung in etwas anderer Perspektive und in einer ersten Ebene längs geschnitten darstellt. Für gleiche Teile sind in den Figuren 1 und 2 und auch in den übrigen Figuren gleiche Bezugszeichen gewählt.

Gemäß den Darstellungen in den Fig. 1 und 2 besteht die Getriebeanordnung 1 aus einem ersten antriebsseitigen Teilgehäuse 2 einem zweiten mittleren Teilgehäuse 3 und einem dritten abtriebsseitigen Teilgehäuse 4. Das erste Teilgehäuse 2 und das zweite Teilgehäuse 3 sind mittels eines ersten Spannmittel 10 relativ zueinander fixiert, auf das Spannmittel und die Fixierung wird weiter unten noch näher eingegangen. Weiter ist das zweite Teilgehäuse 3 mit einem dritten Teilgehäuse 4 mittels eines zweiten Spannmittels 11 verspannt, also an diesem festgelegt. Auch auf dieses zweite Spannmittel 11 und die Fixierung wird noch nachfolgend eingegangen. Angeordnet ist die Getriebeanordnung an einem Fahrradrahmen, von dem nur das Tretlager 5, das mit dem Tretlager 5 verbundene Sattelrohr 6 und das ebenfalls mit dem Tretlager 5 verbundene Unterrohr 7 dargestellt sind, Sattelrohr 6 und Unterrohr 5 nur in Teildarstellung. Die Befestigung der Getriebeanordnung erfolgt einerseits am Unterrohr mit Hilfe einer nicht dargestellten Befestigungseinheit, die zwischen dem ersten Teilgehäuse 2 und dem Unterrohr 7 angeordnet ist. Die nicht dargestellte Befestigungseinheit ist zum Beispiel mittels Bändern an dem ersten Teilgehäuse 2 festgelegt, wobei die Bänder jeweils Teile der Befestigungseinheit und Teile des ersten Teilgehäuses 2 umgreifen und zueinander fixieren. Das Festlegen der Befestigungseinheit (nicht dargestellt) an dem Unterrohr 7 kann ebenfalls zum Beispiel mittels Bändern bewerkstelligt werden, wobei die Bänder in diesem Fall jeweils das Unterrohr 7 einerseits und Teile der Befestigungseinheit (nicht dargestellt) umgreifen und zueinander fixieren. Die Befestigung der Abtriebsseite der Getriebeanordnung 1 am Rahmen erfolgt über das Tretlager 5. Dazu ist ein an der Abtriebsseite der Getriebeanordnung 1 angeordneter Adapter 9 auf die Tretkurbelaufnahme 8' der Tretlagerwelle 12 aufgesetzt und mit dieser verspannt. Getriebeseitig bildet der Adapter 9 die Abtriebswelle der Getriebeanordnung und ist dazu drehfest mit dem Abtriebsrad 13 verbunden. Alternativ kann der Adapter natürlich auch einstückig mit dem Abtriebsrad ausgeführt sein. Eine lösbare Verbindung zwischen Abtriebsrad 13 und Adapter 9 hat allerdings den Vorteil, dass unterschiedlichen Pedalaufnahmen durch Austausch des Adapters Rechnung getragen werden kann. Wie in der Fig. 2 im geschnittenen Bereich dargestellt, handelt es sich bei dem Abtriebsrad 13 um ein Zahnrad das mit einem ersten Rad 14' eines als Doppelrad ausgeführten ersten Zwischenrades 14 kämmt, das ebenfalls als Zahnrad ausgeführt ist. Auf das Zwischenrad 14 wird nachfolgend noch ausführlich eingegangen.

Alternativ könnte es sich bei dem Abtriebsrad auch um ein Kettenrad oder ein Zahnriemenrad handeln, in diesen Fällen wäre dann das erste Rad des Zwischenrades analog als Kettenrad oder Zahnriemenrad ausgeführt und beide Getrieberäder wären durch eine Kette oder einen Zahnriemen wirkverbunden.

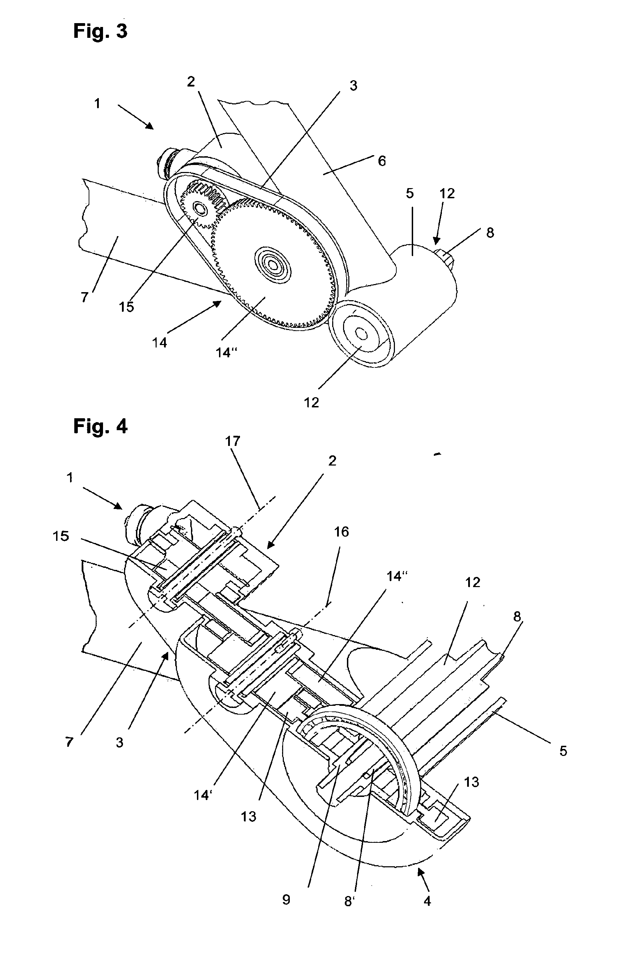

Die vorstehend beschriebene Anordnung gemäß Fig. 2 ist in Fig. 3 nochmals dargestellt, es ist lediglich die Schnittebene verändert, diese zweite Schnittebene zeigt nun einen Schnitt durch das zweite Teilgehäuse 3 in Längsrichtung. Hier ist in der Schnittebene das zweite Rad 14" des ersten Zwischenrades 14 zu erkennen, das mit einem zweiten Zwischenrad 15 kämmt. Wie aus den Figuren 2 und 3 ersichtlich, haben die beiden Räder 14', 14" einerseits unterschiedliche Durchmesser, so dass mittels des ersten Zwischenrades 14 eine Übersetzungsstufe realisiert wird, andererseits sind sie in unterschiedlichen Ebenen, also zweispurig angeordnet. Das erste Rad 14' und das Abtriebsrad 13 befinden sich in einer ersten Ebene und das zweites Rad 14" und das zweites Zwischenrad 15 in einer zweiten Ebene, so dass sich ein Tiefenversatz ergibt, der durch das dritte Teilgehäuse 4 und das zweite Teilgehäuse 3 ebenfalls vollzogen wird, wodurch eine gestufte Gehäuseanordnung entsteht.

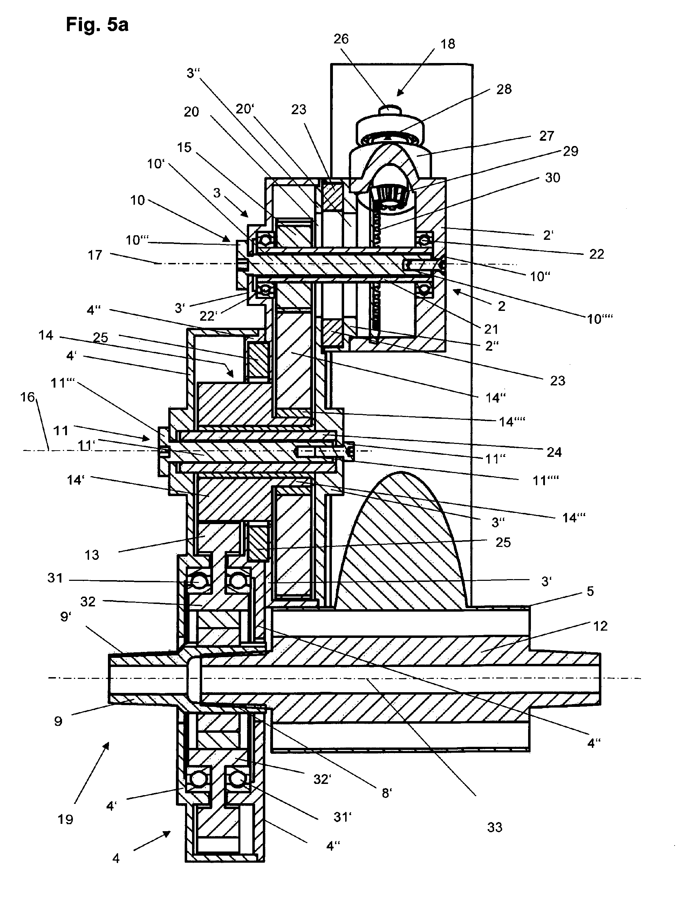

Um nun die verschiedenen Getriebeteile näher zu betrachten wird auf Fig. 4 Bezug genommen, dort ist die Anordnung aus den Figuren 1 bis 3 in einer dritten Schnittebene geschnitten dargestellt, wobei diese Schnittebene senkrecht zu den ersten beiden Schnittebenen durch die Tretlagerwelle 12 die erste Drehachse 16 (Drehachse des ersten Zwischenrades 14) und die zweite Drehachse 17 (Drehachse des zweiten Zwischenrades 15) verläuft. In der Darstellung ist erkennbar, dass auf der einen Tretkurbelaufnahme 8' der Tretlagerwelle 12 der Adapter 9 angeordnet ist. Dieser ist drehfest im Abtriebsrad 13 angeordnet und bildet dessen Drehachse. Dieser Teil des Getriebes soll als zweites Teilgetriebe aufgefasst werden. Das Abtriebsrad 13 kämmt mit dem ersten Rad 14' einer Zwischenradanordnung, wobei die Zwischenradanordnung das erste Rad 14', das zweite Rad 14" und das zweite Zwischenrad 15 umfasst. Das zweite Zwischenrad 15 ist über eine Hohlwelle 21, auf der es drehfest angeordnet ist, mit einem ersten Teilgetriebe verbunden, auf das in Verbindung mit der nachfolgend beschriebenen Fig. 5a näher eingegangen wird. Wie aus der Fig. 4 ersichtlich, ist das erste Teilgetriebe im ersten Teilgehäuse 2, das zweite Zwischenrad 15 und das zweite Rad 14" des Zwischenrades 14 im zweiten Teilgehäuse 3 und das erste Rad 14' des Zwischenrades 14, sowie das Abtriebsrad 13 und der Adapter 9 im dritten Teilgehäuse 4 angeordnet. Auf die Lagerung der Getrieberäder in den Teilgehäusen 2, 3, 4 und auf das Verspannen der Teilgehäuse miteinander wird nachfolgend in Verbindung mit Fig. 5a näher eingegangen.

In Fig. 5a ist der Schnitt gemäß Fig. 4 in Draufsicht dargestellt. Wie ersichtlich, reihen sich die Teilgehäuse 2, 3, 4 beginnend von der Antriebsseite 18 der Getriebeanordnung 1 bis zu deren Abtriebsseite 19 gestuft aneinander. Auf den Zweck der gestuften Ausführung wird weiter unten noch eingegangen. Das erste Teilgehäuse 2 besteht aus einer ersten Gehäusewanne 2' und einem ersten Gehäusedeckel 2" an das sich das zweite Teilgehäuse 3 anschließt. Der Aufbau ist vom Prinzip her ähnlich und besteht aus einer zweiten Gehäusewanne 3' und einem Gehäusedeckel 3". Ebenso verhält es sich bei dem dritten Teilgehäuse 4, das aus einer dritten Gehäusewanne 4' und einem dritten Gehäusedeckel 4" besteht. Der erste Gehäusedeckel 2" und der zweite Gehäusedeckel 3" weisen jeweils eine Ausnehmung 20, 20' auf, die von einer ersten Hohlwelle 21 durchragt wird. Die Hohlwelle 21 ist mittels eines ersten Lagers 22 in der ersten Gehäusewanne 2' und mittels eines zweiten Lagers 22' in der zweiten Gehäusewanne 3' gelagert. Konzentrisch zur Hohlwelle 21 weisen die erste Gehäusewanne 2' und die zweite Gehäusewanne 3' jeweils eine Ausnehmung auf, die von einem Spannmittel 10 durchragt wird. Das Spannmittel 10 seinerseits besteht aus einem Bolzen 10' und einer Schraube 10", wobei der Bolzen 10' einen Kopf 10'" aufweist, der an der Außenseite der zweiten Gehäusewanne 3' anliegt. An seiner dem Kopf 10'" abgewandten Seite ist in dem Bolzen ein Innengewinde 10"" angeordnet, das mit einer Schraube 10" zusammenwirkt, die mit ihrem Schraubenschaft die erste Gehäusewanne 2' durchragt und mit ihrem Schraubenkopf an der Außenseite der ersten Gehäusewanne 2' angreift. Durch Spannen des ersten Spannmittels 10 werden das erste Teilgehäuse 2 und das zweite Teilgehäuse 3 miteinander verspannt. Zwischen dem ersten Gehäusedeckel 2" und dem zweiten Gehäusedecke 3" ist eine Hirthverzahnung in Form eines Doppelrings 23 vorgesehen, dessen Teilringe (nicht dargestellt) an ihren gegenüberliegenden Stirnseiten die Hirth-Verzahnung aufweisen und mit ihren der Verzahnung abgewandten Seiten jeweils an dem ersten Gehäusedeckel 2" und dem zweiten Gehäusedeckel 3" konzentrisch zur Hohlwelle 21 festgelegt sind. Die beiden Teile des Rings 23 lassen sich bei gelöstem Spannmittel 10 zusammen mit dem ersten Teilgehäuse 2 und dem zweiten Teilgehäuse 3 gegeneinander verschwenken und durch Spannen des Spannmittels 10 im Raster der Hirthverzahnung zueinander verspannen. Die Schwenkachse wird dabei durch die Mittelachse der Hohlwelle 21 gebildet.

Analog zu der vorstehend beschriebenen Verspannung des ersten Teilgehäuses 2 mit dem zweiten Teilgehäuse 3 ist auch das zweite Teilgehäuse 3 mit dem dritten Teilgehäuse 4 verspannt. Hier ist eine Hohlachse 24 vorgesehen, die die zweite Gehäusewanne 3' und den dritten Gehäuseboden 4", jeweils durch eine Ausnehmung durchragt. Die Hohlachse 24 ist einerseits im zweiten Gehäuseboden 3" und in der dritten Gehäusewanne 4' mittels Übergangspassung gelagert. Durchragt wird die Hohlachse 24 von einem zweiten Spannmittel 11, das seinerseits aus einem Spannbolzen 11' und einer Spannschraube 11" besteht. Auch hier weist der Spannbolzen 11' einen Spannbolzenkopf 11'" auf, der durch eine zur Hohlachse 24 konzentrische Öffnung in der dritten Gehäusewanne 4' auf der Außenseite angreift und ist an seinem gegenüberliegenden Ende mit einem Spannbolzeninnengewinde 11"" versehen. Das Spannbolzeninnengewinde 11"" wirkt mit der Spannschraube 11" zusammen, wobei der Schaft der Spannschraube 11" eine zur Hohlachse 24 konzentrische Öffnung in dem zweiten Gehäusedeckel 3" durchragt und an der Außenseite des zweiten Gehäusedeckels 3" angreift. Mit Hilfe des zweiten Spannmittels 11 lassen sich durch Anziehen der Spannschraube 11" das zweite Teilgehäuse 3 und das dritte Teilgehäuse 4 zueinander fixieren. Dies wird in diesem Fall durch Reibschluss erreicht, wobei eine zur Hohlachse 24 konzentrisch angeordnete die Haftreibung erhöhende Zwischenlage 25 zwischen dem dritten Gehäusedeckel 4" und der zweiten Gehäusewanne 3' vorgesehen ist. Bei gelöstem zweiten Spannmittel 11 lassen sich das zweite Teilgehäuse 3 und das dritte Teilgehäuse 4 stufenlos zueinander verschwenken, Schwenkachse ist dabei die Mittelachse der Hohlachse 24. Die Fixierung erfolgt durch Anziehen der Spannschraube 11", dabei erhöht die Zwischenlage 25 die Haftreibung so, dass kein ungewolltes verschwenken des zweiten Teilgehäuses 3 zum dritten Teilgehäuse 4 möglich ist.

In Abweichung zur Darstellung in Fig. 5a müssen die Gehäusedeckel der Gehäusewanne-Gehäusedeckel-Kombination nicht zwingend flach ausgeführt sein. Es ist natürlich genauso möglich jeweils zwei miteinander korrespondierende Gehäusehalbschalen vorzusehen. Am übrigen konstruktiven Aufbau ändert sich dadurch nichts, insbesondere die Verspannung der Teilgehäuse zueinander ist mit gleichen Mitteln ausgeführt.

Nachdem vorstehend ein beispielhaftes Gehäusekonzept für die erfindungsgemäße Getriebeanordnung beschrieben wurde, soll nun kurz auf Varianten eingegangen werden. Zunächst ist festzuhalten dass die Stufung der Teilgehäuse auch anders aussehen kann. So ist es je nach den Gegebenheiten am Rahmen des Fahrrades auch möglich, das mittlere zweite Teilgehäuse auch bezogen auf den Rahmen des Fahrrades auf der dem Rahmen abgewandten Seite der Getriebeanordnung vorzusehen und sowohl das erste antriebsseitige Teilgehäuse als auch das abtriebsseitige dritte Teilgehäuse auf der dem Rahmen zugewandten Seite der Getriebeanordnung. Die die Lage der fixierten Teilgehäuse zueinander sichernden Mittel - vorstehend sind eine Hirthverzahnung und eine den Reibschluss erhöhende Zwischenlage erwähnt - können natürlich auch anders ausgeführt sein. Es sind gezahnte Ringe denkbar die beim Verspannen in die Oberfläche der jeweils zu verspannenden Gehäuseteile eindringen und so Formschluss herbeiführen. Weiter ist es denkbar, mit Hartkörpern versehene Zwischenlagen, entweder als Beschichtung oder als Zwischenlage vorzusehen. Auch hier tritt Formschluss ein, weil die Hartkörper beim Verspannen in die Oberfläche der Teilgehäuse eindringen. Unter Hartkörper werden dabei Granulate verstanden die härter sind, als das für die Teilgehäuse verwendete Material. Bei Kunststoffgehäusen könnten es Metallspäne sein, bei Stahlgehäusen beispielsweise Diamantstaub um zwei Extreme des erfindungsgemäßen Gestaltungsbereichs des Fachmanns anzusprechen.

Die vorstehend beschriebenen, die Lage der fixierten Teilgehäuse zueinander sichernden Mittel sind dann nicht notwendig, wenn die Materialien aus denen die zueinander verspannten Teilgehäuse gefertigt sind, beim Verspannen ohne zusätzliche Mittel Reibschluss herbeiführen. Dies ist, wie Versuche gezeigt haben, beispielsweise bei der Verwendung von Leichtmetalllegierungen als Material für die Teilgehäuse der Fall.

Die vorstehend ebenfalls beschriebenen Spannmittel 10, 11 müssen nicht als die Gehäuse durchgreifende Spannmittel ausgeführt sein es ist vielmehr denkbar, hier Spannmittel vorzusehen, die die Teilgehäuse zangenartig umschließen, auch einfache Schraubverbindungen sind denkbar. Was das Gehäusematerial angeht, so sind, angefangen von im Spritzgießverfahren hergestellte Kunststoff- oder Leichtmetallgehäuse, über tiefgezogene Blechgehäuse, auch gefräste Metallgehäuse ebenso denkbar, wie mit Kunststoff umspritzte Metallgestelle oder ähnliche Hybridgehäuse. Die Gehäuse müssen darüber hinaus nicht zwingend rundum geschlossen sein, es ist vielmehr auch denkbar, durchbrochene Gehäuse vorzusehen, um das Gewicht zu reduzieren. Dies insbesondere, wenn gegen Verschmutzung unempfindliche Getriebeteil, wie zum Beispiel Kettentriebe, eingehaust werden sollen. Handelt es sich dagegen um staub-, schmutz oder wasserempfindliche Getriebeteile, können diese oder die gesamte Getriebeanordnung gekapselt ausgeführt sein.

Neben der Gehäuseanordnung zeigt Fig. 5a auch den als Zahnradgetriebe ausgeführten Triebstrang selbst. Beginnend auf der Antriebsseite 18 soll zunächst auf die Ankopplung des nicht dargestellten Motors eingegangen werden. Beim Motor handelt es sich nach dem heutigen Stand der Technik um einen mittels Akkumulator betriebenen Elektromotor. Als Akkumulatoren werden heute üblicherweise Lithium-Ionen-Akkus eingesetzt. Der angesprochene Motor ist über eine nicht dargestellte mechanische Schnittstelle lösbar mit der Getriebeanordnung 1 verbunden, dazu wird ein an der Getriebeanordnung angeordnetes Kopplungselement 26, zum Beispiel ein Kegelrad, mit einem an der Motorwelle (nicht dargestellt) angeordneten Kopplungselement (nicht dargestellt), zum Beispiel einer Kegelradaufnahme, gekoppelt. Darüber hinaus kann das Gehäuse des Motors (nicht dargestellt) mittels einer an einem Gehäuseansatz 27 am ersten Teilgehäuse 2 vorgesehenen Kopplungsanordnung (nicht dargestellt), deren Gegenstück (nicht dargestellt) sich am Gehäuse des Motors (nicht dargestellt) befindet, lösbar verbunden werden. Als Kopplungsanordnung kommt eine Schraubverbindung ebenso in Frage, wie eine Bajonettverbindung. Es sind aber natürlich auch andere Verbindungsarten denkbar.

Das getriebeseitige Kopplungselement 26 ist über eine Antriebswelle 28 (in den Figuren nicht sichtbar und deshalb nur durch einen Pfeil angedeutet), die in dem Gehäuseansatz 27 des ersten Teilgehäuses 2 gelagert ist, mit einem Kegelrad eines Winkeltriebs verbunden, der aus einem Kegelradritzel 29 und einem untersetzenden Tellerrad 30 besteht. Das Tellerrad ist drehfest auf der Hohlwelle 21 angeordnet und befindet sich, ebenso wie das Kegelradritzel 29, im ersten Teilgehäuse 2. Wie bereits erwähnt, ist die Hohlwelle 21 über die Lager 22 und 22' einerseits in der Gehäusewanne 2' des ersten Teilgehäuses 2 und andererseits in der zweiten Gehäusewanne 3' des zweiten Teilgehäuses 3 drehbar gelagert. Ebenfalls auf der Hohlwelle 21 drehfest angeordnet, befindet sich das zweite Zwischenrad 15 im zweiten Teilgehäuse 3. Mit dem zweiten Zwischenrad 15 kämmt das zweite Rad 14" des ersten Zwischenrades 14 das, wie bereits ausgeführt, als Doppelrad ausgebildet ist und untersetzt um eine weitere Stufe. Das erste Zwischenrad 14 ist drehbar auf der Hohlachse 24 angeordnet, wobei die Hohlachse 24 und das erste Zwischenrad 14 eine Gleitlagerpaarung bilden. Das erste Zwischenrad 14 ist wie erwähnt als Doppelrad ausgebildet, wobei sich das erste Rad 14' im dritten Teilgehäuse und das zweite Rad 14" im zweiten Teilgehäuse befinden. Das erste Zwischenrad 14 ist so ausgebildet, dass das erste Rad 14' einen koaxial angeordneten Ansatz 14'" aufweist, auf dem das zweite Rad 14" unter Zwischenlage eines Freilaufs 14"" lagert. Der Freilauf 14"" entkoppelt das erste Rad 14' vom zweiten Rad 14", wenn die Drehzahl des ersten Rades 14' höher ist, als die Drehzahl des zweiten Rades 14". Die Ausführung des ersten Zwischenrades 14 als Doppelrad, wobei das erste und das zweite Rad 14', 14" unterschiedliche Durchmesser aufweisen, erlaubt einerseits eine weitere Untersetzungsstufe, andererseits wird durch die zweispurige Ausführung einen Versatz im Getriebe erreicht. Darüber hinaus ist durch die Anordnung des Freilaufs 14"" zwischen den Rädern 14', 14" die Freilauffunktion, die für Hilfsantriebe der in Rede stehenden Art unabdingbar ist, in das Zwischenrad 14 integriert.

Das erste Rad 14' des Zwischenrades 14 kämmt mit dem Abtriebsrad 13 und ist zusammen mit diesem im dritten Teilgehäuse 4 angeordnet. Gelagert ist das Abtriebsrad 13 über Wälzlager 31, 31' in dem dritten Teilgehäuse 4. Hierzu sind an dem Abtriebsrad 13, zu beiden Seiten, konzentrisch zu seiner Drehachse 33, umlaufende Schultern 32, 32' vorgesehen, die sich am Innenring des jeweils zugeordneten Wälzlagers 31, 31' abstützen, wobei der jeweilige Außenring der Wälzlager 31, 31' in einer konzentrisch zur Drehachse 33 des Abtriebsrades 13 angeordneten Lageraufnahme in der dritten Gehäusewanne 4' und in dem dritten Gehäusedeckel 4" angeordnet ist. In einer ebenfalls konzentrisch zur Drehachse 33 angeordneten Ausnehmung im Abtriebsrad 13 ist der Adapter 9 drehfest angeordnet, der auf seiner der Tretlagerwelle 12 zugewandten Seite eine Ausnehmung aufweist, die mit der Tretkurbelaufnahme 8' korrespondiert. Im montierten Zustand, den die Fig. 5a zeigt, ist der Adapter 9 auf der Tretkurbelaufnahme 8' drehfest angeordnet und besitzt auf seiner der Tretlagerwelle 12 abgewandten Seite einen Tretkurbelaufnahmeansatz 9', der analog zur Tretkurbelaufnahme 8' die Tretkurbel (nicht dargestellt) aufnehmen kann, wobei diese, je nach Ausführung der Tretlageraufnahme, durch entsprechende Befestigungsmittel (nicht dargestellt) auf dem Tretkurbelaufnahmeansatz 9' festlegbar ist. Entsprechendes gilt natürlich für die Fixierung des Adapters 9 auf der Tretkurbelaufnahme 8'. Auch hier wird der Adapter 9 durch entsprechende Befestigungsmittel (nicht dargestellt) auf der Tretkurbelaufnahme 8' fixiert.

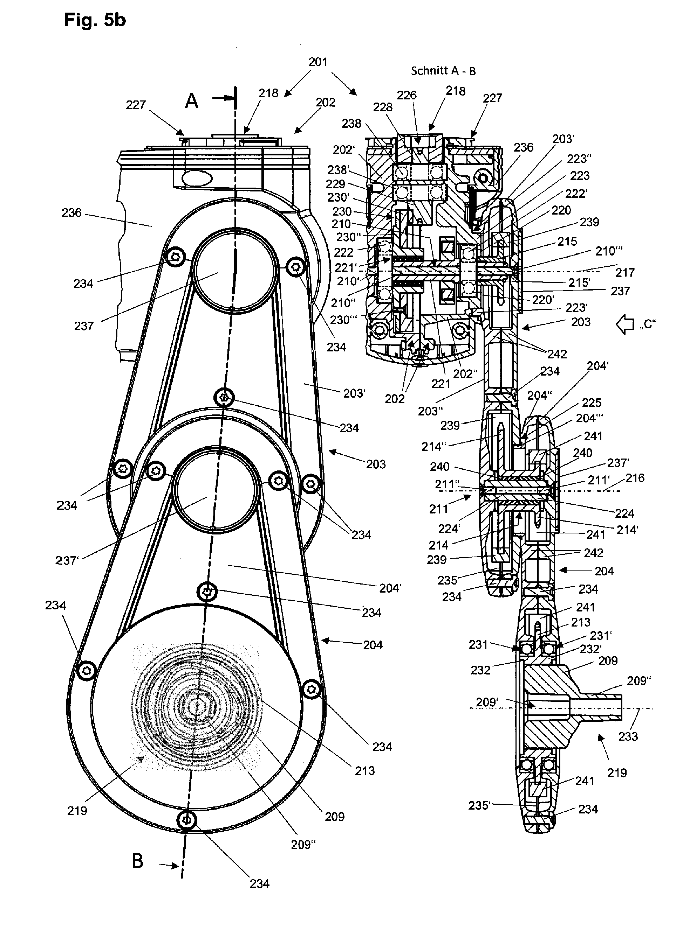

Selbstverständlich kann auch hinsichtlich des vorstehend beschriebenen Triebstrangs die Konstruktion unterschiedlich ausgestaltet werden, ohne dass dabei die erfindungswesentlichen Aspekte der Anpassbarkeit der Getriebeanordnung an unterschiedliche Gegebenheiten hinsichtlich des Rahmens des Fahrzeugs berührt werden. Fig. 5b zeigt eine zur Fig. 5a abweichende alternative Ausführungsform der erfindungsgemäßen Getriebeanordnung. In der Darstellung links ist eine Draufsicht auf die Gehäuseanordnung gezeigt und in der Darstellung rechts eine Schnittdarstellung entlang der Schnittlinie A - B. Die Schnittlinie ist in der Darstellung links durch eine strichpunktierte Linie kenntlich gemacht. Wie aus beiden Darstellungen ersichtlich, reihen sich die Teilgehäuse 202, 203, 204 beginnend von der Antriebsseite 218 der Getriebeanordnung 201 bis zu deren Abtriebsseite 219 gestuft aneinander. Auf den Zweck der gestuften Ausführung wird weiter unten noch eingegangen. Das erste Teilgehäuse 202 ist in beiden Darstellungen in Teildarstellung gezeigt, die Bruchkanten befinden sich in der Darstellung jeweils links. Es besteht aus einer ersten als Halbschale ausgeführten Gehäusewanne 202' und einem ersten als Halbschale ausgeführten Gehäusedeckel 202". An das erste Teilgehäuse 202 schließt sich das zweite Teilgehäuse 203 an. Dessen Aufbau ist vom Prinzip her ähnlich und besteht aus einer zweiten als Halbschale ausgeführten Gehäusewanne 203' und einem zweiten als Halbschale ausgeführten Gehäusedeckel 203". Ebenso verhält es sich bei dem dritten Teilgehäuse 204, das aus einer dritten als Halbschale ausgeführten Gehäusewanne 204' und einem dritten als Halbschale ausgeführten Gehäusedeckel 204" besteht. Der erste Gehäusedeckel 202" und der zweite Gehäusedeckel 203" weisen jeweils eine Ausnehmung 220, 220' auf, die von einer Hohlwelle 221 durchragt wird. Die Hohlwelle 221 ist mittels eines ersten Lagers 222 in der ersten Gehäusewanne 202' und mittels eines zweiten Lagers 222' in dem ersten Gehäusedeckel 202" des ersten Teilgehäuses 202 gelagert. Konzentrisch zur Hohlwelle 221 weist die erste Gehäusewanne 202' eine Gewindebohrung 210' auf. Die zweite Gehäusewanne 203' ist von einer Ausnehmung durchsetzt, die von einem ersten Spannmittel 210 durchragt wird. Das erste Spannmittel 210 seinerseits besteht aus einer Zugschraube 210", wobei die Zugschraube 210" einen Schraubenkopf 210'" aufweist, der an der Außenseite der zweiten Gehäusewanne 203' anliegt. An ihrer dem Schraubenkopf 210'" abgewandten Seite greift die Zugschraube 210"mit ihrem Schraubenschaft in die Gewindebohrung 210'. Durch Spannen des ersten Spannmittels 210 mittels eindrehen der Zugschraube 210" werden das erste Teilgehäuse 202 und das zweite Teilgehäuse 203 miteinander verspannt. An dem ersten Gehäusedeckel 202" ist rund um die Ausnehmung 220 ein umlaufender Kragen 223 angeordnet, der von einem am zweiten Gehäusedeckel 203" angeordneten die Ausnehmung 220' bildenden Ring 223' umgriffen ist, dabei liegt der Ring 223' stirnseitig am Gehäusedeckel 202" an und bildet mit diesem eine erste Anlagefläche 223". Das erste Teilgehäuse 202 lässt sich bei gelöstem ersten Spannmittel 210 gegenüber dem zweiten Teilgehäuse 203 verschwenken und durch Spannen des ersten Spannmittels 210 an der ersten Anlagefläche 223" mittels Reibschluss festlegen. Die Schwenkachse wird dabei durch die Drehachse der Hohlwelle 221 gebildet, die wie unten ausgeführt auch Drehachse 217 des zweiten Zwischenrades 215 ist.

Analog zu der vorstehend beschriebenen Verspannung des ersten Teilgehäuses 202 mit dem zweiten Teilgehäuse 203 ist auch das zweite Teilgehäuse 203 mit dem dritten Teilgehäuse 204 verspannt. Hier ist eine Hohlachse 224 vorgesehen, die die als Halbschale ausgebildete zweite Gehäusewanne 203' und den als Halbschale ausgebildeten dritten Gehäusedeckel 204", jeweils durch eine Ausnehmung durchragt. Die Ausnehmungen sind dabei konzentrisch zur Hohlachse 224 angeordnet, dabei weist die Ausnehmung in dem Gehäusedeckel 204" einen umlaufenden Kragen 204'" auf, der in die in der Gehäusewanne 203' angeordnete Ausnehmung eingreift. Dabei bilden der Gehäusedeckel 204" und die Gehäusewanne 203' rund um die Ausnehmung in der Gehäusewanne 203' eine zweite Anlagefläche 225 aus.

Die Hohlachse 224 ist einerseits in einer Ausnehmung im zweiten Gehäusedeckel 203" und andererseits in einer Ausnehmung in der dritten Gehäusewanne 204' mittels Übergangspassung gelagert. Eine die Hohlachse 224 durchsetzende Durchgangsbohrung 224' weist an beiden Enden der Hohlachse 224 ein Innengewinde auf, wobei die Innengewinde mit einer ersten Spannschraube 211' und einer zweiten Spannschraube 211" zusammenwirken und so das zweite Spannmittel 211 bilden. Auch hier durchragen die Spannschrauben 211', 211" mit ihren Schäften konzentrisch zur Hohlachse 224 angeordnete Öffnung in dem zweiten Gehäusedeckel 203" und der dritten Gehäusewanne 204' und greifen mit ihren Schraubenköpfen jeweils auf der Außenseite des zweiten Gehäusedeckels 203" und der dritten Gehäusewanne 204' an. Mit Hilfe des zweiten Spannmittels 211 lassen sich durch Anziehen der Spannschraube 211', 211" das zweite Teilgehäuse 203 und das dritte Teilgehäuse 204 zueinander fixieren. Dies wird in diesem Fall ebenfalls durch Reibschluss erreicht, wobei an der zur Hohlachse 224 konzentrisch angeordneten zweiten Anlagefläche 225 zwischen der zweiten Gehäusewanne 203' und dem dritten Gehäusedeckel 204" Reibschluss entsteht. Bei gelöstem zweiten Spannmittel 211 lassen sich das zweite Teilgehäuse 203 und das dritte Teilgehäuse 204 stufenlos zueinander verschwenken, Schwenkachse ist dabei die Mittelachse der Hohlachse 224, die wie unten beschrieben auch Drehachse 216 des zweiten Zwischenrades 214 ist. Durch die Fixierung mittels Reibschluss wird ein ungewolltes Verschwenken des zweiten Teilgehäuses 203 zum dritten Teilgehäuse 204 sicher unterbunden.

Bei den Teilgehäusen 202, 203, 204, die jeweils aus halbschaligen Gehäusewannen 202', 203', 204' und halbschaligen Gehäusedeckeln 202", 203", 204" bestehen, sind die Gehäusewannen 202', 203', 204' und Gehäusedeckel 202", 203", 204" mittels Schrauben zusammengehalten. Beim ersten Teilgehäuse 202 sind die Schrauben durch ein Umgehäuse 236 verdeckt. Bei dem zweiten Teilgehäuse 203 und dem dritten Teilgehäuse 204 sind die Schrauben 234 in der Darstellung sichtbar, dort sind die Gehäusehalbschalen jeweils unter Zwischenlage einer Dichtung 235, 235' mittels der Schrauben 234 zusammengehalten. Dabei sind Gewindebohrungen in den Gehäusedeckeln 203" 204" angeordnet, in die die Schrauben 234 über korrespondierende Durchgangsbohrungen in den Gehäusewannen 203', 204' eingreifen.

Zur Abdeckung der sichtbaren Teile der Spannmittel 210, 211 von der Sichtseite "C" her sind Deckel 237, 237' in entsprechenden konzentrisch zu den Spannmitteln 210, 211 in den Gehäusewannen 203', 204' angeordneten Ausnehmungen befestigt. Die Deckel 237, 237' können direkt an den Ausnehmungen der Gehäusewannen 203', 204' befestigt, vorzugsweise kraft- oder stoffschlüssig befestigt sein. Alternativ oder zusätzlich können die Deckel 237, 237' mit den Spannmitteln 210, 211 befestigt, vorzugsweise kraft-, oder stoffschlüssig befestigt sein.

Nachdem vorstehend ein alternatives Gehäusekonzept für die erfindungsgemäße Getriebeanordnung beschrieben wurde, soll auch hier kurz auf Varianten eingegangen werden. Zunächst ist festzuhalten dass die Stufung der Teilgehäuse auch hier anders aussehen kann. So ist es je nach den Gegebenheiten am Rahmen des Fahrrades auch möglich, das mittlere zweite Teilgehäuse auch bezogen auf den Rahmen des Fahrrades auf der dem Rahmen abgewandten Seite der Getriebeanordnung vorzusehen und sowohl das erste antriebsseitige Teilgehäuse, als auch das abtriebsseitige dritte Teilgehäuse auf der dem Rahmen zugewandten Seite der Getriebeanordnung. Zusätzlich können die Lage der Teilgehäuse zueinander sichernde Mittel, z.B. Hirth-Verzahnungen oder reibschlusserhöhende Zwischenlagen vorgesehen sein.

Die vorstehend beschriebenen Spannmittel 210, 211 müssen nicht als die Gehäuse durchgreifende Spannmittel ausgeführt sein, auch hier ist es denkbar Spannmittel vorzusehen, die die Teilgehäuse zangenartig umschließen. Was das Gehäusematerial angeht, so sind im Spritzgießverfahren hergestellte Kunststoff- oder Leichtmetallgehäuse, tiefgezogene Blechgehäuse, gefräste Metallgehäuse oder kunststoffumspritzte Metallgestelle oder ähnliche Hybridgehäuse denkbar. Die Gehäuse müssen darüber hinaus nicht zwingend rundum geschlossen sein, es ist vielmehr auch denkbar, durchbrochene Gehäuse vorzusehen, um das Gewicht zu reduzieren.

Neben der Gehäuseanordnung zeigt Fig. 5b in der rechten Schnittdarstellung auch den als Kettentrieb ausgeführten Triebstrang selbst. Beginnend auf der Antriebsseite 218 soll auch hier zunächst auf die Ankopplung des nicht dargestellten Motors eingegangen werden. Wie bereits oben erwähnt handelt es sich beim Motor nach dem heutigen Stand der Technik um einen mittels Akkumulator betriebenen Elektromotor. Als Akkumulatoren werden heute üblicherweise Lithium-Ionen-Akkus eingesetzt. Der angesprochene Motor ist über eine mechanische Schnittstelle lösbar mit der Getriebeanordnung verbunden. Die Verbindung erfolgt indem eine an der Getriebeanordnung angeordnete Kegelradaufnahme 226, mit einem an der Motorwelle (nicht dargestellt) angeordneten Kegelrad (nicht dargestellt), gekoppelt wird. Dies geschieht, indem das Teilgehäuse 202 mittels einer Bajonettverbindung, von der das positive Eingriffelement 227 am ersten Teilgehäuse 202 angeordnet ist, mit dem Gehäuse des Motors (nicht dargestellt), das das negative Aufnahmeelement (nicht dargestellt) der Bajonettverbindung trägt, lösbar verbunden werden. Mit dem Ankoppeln des Motorgehäuses (nicht dargestellt) an das erste Teilgehäuse 202 erfolgt gleichzeitig der Eingriff des motorseitigen Kegelrades (nicht dargestellt) in die Kegelradaufnahme 226. Die Kegelradaufnahme ist auf einer Antriebswelle 228 drehfest angeordnet, die mittels zweier Wälzlager 238, 238' im ersten Teilgehäuse 202 drehbar gelagert ist. Die der Kegelradaufnahme 226 abgewandte Seite der Antriebswelle 228 ist als Ritzel 229 ausgebildet, das mit einem Tellerrad 230 in Eingriff ist. Das Tellerrad 230 besteht aus einem Zahnring 230' der auf einem Zahnringträger 230" mittels Schrauben 230" angeordnet ist.

Der Zahnringträger 230" ist über einen Freilauf 221' auf der Hohlwelle 221 angeordnet, die mittels zweier Wälzlager 222, 222' im ersten Teilgehäuse 202 drehbar gelagert ist. Der Freilauf 221' wirkt dabei so, dass dann, wenn die Drehzahl der Hohlwelle 221 größer ist als die Drehzahl des Tellerrades 230, dieses nach Art einer Überholkupplung gegen die Hohlwelle 221 entkoppelt ist. Das freie Ende der Hohlwelle 221 durchragt die Ausnehmung 220 in dem Gehäusedeckel 202" des Teilgehäuses 202 und die Ausnehmung 220' in dem Gehäusedeckel 203" des Teilgehäuses 203. Auf dem freien Ende der Hohlwelle 221 ist ein als Kettenrad ausgebildetes zweites Zwischenrad 215 drehfest angeordnet und mittels Sprengring 215' axial gesichert. Es ist auf der Hohlwelle 221 so angeordnet, dass es im zweiten Teilgehäuse 203 um eine Drehachse 217 umläuft und über ein Triebmittel in Form einer ersten Triebkette 239 auf das ebenfalls als Kettenrad ausgebildete zweite Rad 214" des ersten Zwischenrades 214 wirkt. Das erste Zwischenrad 214 ist als Doppelrad ausgebildet und mittels Nadellager 240 drehbar auf der Hohlachse 224 angeordnet, dabei läuft das erste Rad 214' im dritten Teilgehäuse 204 und das zweite Rad 214" wie erwähnt im zweiten Teilgehäuse 203 jeweils um eine Drehachse 216 um. Die Ausführung des ersten Zwischenrades 214 als Doppelrad, wobei das erste und das zweite Rad 214', 214" unterschiedliche Durchmesser aufweisen, erlaubt einerseits eine weitere Untersetzungsstufe, andererseits wird durch die zweispurige Ausführung ein Versatz im Getriebe erreicht.

Das erste Rad 214' des ersten Zwischenrades 214 ist mit dem ebenfalls als Kettenrad ausgebildeten Abtriebsrad 213 über eine als Triebmittel wirkende zweite Triebkette 241 wirkverbunden. Abtriebsrad 213 und zweite Triebkette 241 sind im dritten Teilgehäuse 204 angeordnet. Zur Lagerung des Abtriebsrads 213 in dem dritten Teilgehäuse 204 sind Wälzlager 231, 231' vorgesehen, an deren Innenring sich jeweils am Abtriebsrad 213 ausgebildete umlaufende Schultern 232, 232' abstützen. Der jeweilige Außenring der Wälzlager 231, 231' ist in konzentrisch zur Drehachse 233 des Abtriebsrades 213 angeordneten Lageraufnahmen in der dritten Gehäusewanne 204' und in dem dritten Gehäusedeckel 204" aufgenommen. In einer ebenfalls konzentrisch zur Drehachse 233 angeordneten Ausnehmung im Abtriebsrad 213 ist ein Adapter 209 drehfest angeordnet. Die Ausnehmung im Abtriebsrad 213 und der darin angeordnete Adapter 209 weisen dabei die miteinander korrespondierende Kontur eines "Gleichdicks" auf. Auf seiner der Tretlagerwelle (nicht dargestellt) zugewandten Seite besitzt der Adapter 209 eine Ausnehmung 209', die mit der Tretkurbelaufnahme (nicht dargestellt) der Tretlagerwelle (nicht dargestellt) korrespondiert. Im montierten Zustand ist der Adapter 209 auf der Tretkurbelaufnahme (nicht dargestellt) drehfest angeordnet und besitzt auf seiner der Tretlagerwelle (nicht dargestellt) abgewandten Seite einen Tretkurbelaufnahmeansatz 209", der analog zur Tretkurbelaufnahme (nicht dargestellt) die Tretkurbel (nicht dargestellt) aufnehmen kann, wobei diese, je nach Ausführung der Tretlageraufnahme, durch entsprechende Befestigungsmittel (nicht dargestellt) auf dem Tretkurbelaufnahmeansatz 209" festlegbar ist. Entsprechendes gilt natürlich für die Fixierung des Adapters 209 auf der Tretkurbelaufnahme (nicht dargestellt). Auch hier wird der Adapter 9 durch entsprechende Befestigungsmittel (nicht dargestellt) auf der Tretkurbelaufnahme (nicht dargestellt) fixiert.

Zur Versteifung der jeweils als Halbschalen ausgebildeten zweiten Gehäusewanne 203' und dritten Gehäusewanne 204', sowie des zweiten Gehäusedeckels 203" und dritten Gehäusedeckels 204" sind in den Halbschalen Rippen 242 vorgesehen, wobei sich die Rippen 242 in den Deckeln und Wannen bei geschlossenen Teilgehäusen 203, 204 jeweils gegenseitig abstützen. Durch die Rippen 242 wird die Schallabstrahlung minimiert. Auch können die Rippen 242 gleichzeitig als Aufnahmebereiche für zumindest einen Teil der die Halbschalen miteinander fixierenden Schrauben 234 dienen.

Das erste Teilgehäuse 2, 202, das zweite Teilgehäuse 3, 203 sowie das dritte Teilgehäuse 4, 204 sind vorzugsweise derart miteinander verbunden, dass diese zueinander im Endmontagezustand steif verbaut sind. Diese Versteifung der im ersten Teilgehäuse 2, 202 und dem zweiten Teilgehäuse 3, 203 gelagerten Achsen zueinander ermöglichen eine vereinfachte Ausgestaltung der Halterung (nicht dargestellt) des ersten Teilgehäuses 2, 202 am Fahrzeugrahmen, da insbesondere während der Lastaufbringung auf den Triebstrang und damit auf das Getriebe wirkende Kräfte und Momente auf einfache und wirkungsvolle Weise aufgenommen werden können. Die innerhalb des Getriebes wirkenden Lagerkräfte werden über die Teilgehäuse 2, 3, 202, 203 abgefangen, so dass die Halterung (nicht dargestellt) im Wesentlichen lediglich das an der Tretlagerwelle 12 eingebrachte Antriebsmoment am Fahrzeugrahmen aufnehmen muss. Auch die kragenförmigen Übergänge (Kragen 223 sowie Kragen 204"') der Teilgehäuse 2, 3, 4, 202, 203, 204 untereinander fördern die steife Verbindung.

Neben den in Verbindung mit den Figuren 5a und 5b beschriebenen Varianten besteht natürlich die Möglichkeit eine Mischform unterschiedlicher Getriebearten für den Triebstrang zu wählen. Dem Fachmann sind derartige Mischformen aus Zahnradtrieb, Kettentrieb, Zahnriementrieb oder Riementrieb geläufig, so dass sich eine ausführliche Beschreibung hierzu erübrigt. Es sind nahezu beliebige Kombinationen der Getriebearten Rädertrieb, Kettentrieb oder (Zahn)-Riementrieb denkbar.

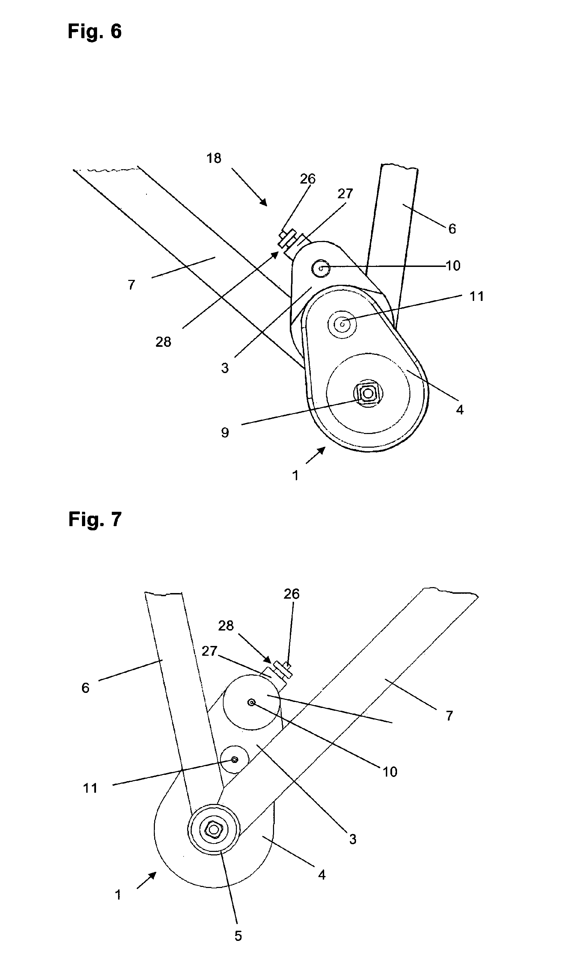

Um die Möglichkeiten der Anpassbarkeit der Getriebeanordnung 1 an unterschiedliche Rahmen aufzuzeigen sind nachfolgend in den Figuren 6 bis 10 Beispiele dargestellt, wie sie bei Fahrrädern häufig vorkommen. Dabei zeigen Fig. 6 und Fig. 7 in Frontansicht (Fig. 6) und Rückansicht (Fig. 7) eine Rahmenanordnung, wie sie für sogenannte Herrenräder typisch ist. Sattelrohr 6 und Unterrohr 7 münden in einem spitzen Winkel in das Tretlager. Versteift werden Sattelrohr 6 und Unterrohr 7 durch ein Oberrohr (nicht dargestellt), das einerseits mit dem Sattelrohr 6 und andererseits mit einer Lenkeraufnahme (nicht dargestellt) verbunden ist, an der auch das Unterrohr 7 festgelegt ist. Bei dieser Rahmenkonfiguration bietet es sich an, die Getriebeanordnung 1 so am Rahmen anzubringen, dass das Kopplungselement 26 im Winkel zwischen Unterrohr 7 und Sattelrohr 6 liegt und die Antriebswelle 28 (in den Figuren nicht sichtbar) in etwa parallel zum Unterrohr 7 verläuft, so dass der Motor (nicht dargestellt) bequem mit der Getriebeanordnung 1 koppelbar ist. Soll das Kopplungselement näher am Tretlager 5 liegen als in den Figuren 6 und 7 dargestellt, ist lediglich nach Lösen der zweiten Spannmittel 11, das dritte Teilgehäuse 4 gegenüber dem zweiten Teilgehäuse 3 zu verschwenken. Mit dem Begriff "Lösen" ist hier gemeint, dass die Spannung nur so weit gelöst wird, dass sich die Teilgehäuse gegeneinander verschwenken lassen. Die Orientierung der Antriebswelle 28 (in Figur 5 angedeutet) parallel zum Unterrohr 7 lässt sich, nach dem erneuten Fixieren des zweiten und dritten Teilgehäuses 3, 4 durch Spannen des zweiten Spannmittels 11, dadurch bewerkstelligen, dass, nach dem Lösen des ersten Spannmittels 10, das erste Teilgehäuse 2 gegenüber dem zweiten Teilgehäuse 3 so lange verschwenkt wird, bis die gewünschte Orientierung erreicht ist. Durch Spannen des ersten Spannmittels 10 sind das erste Teilgehäuse 2 und das zweite Teilgehäuse 3 dann in der gewünschten Ausrichtung fixierbar. Selbstverständlich ist die Getriebeanordnung an ihrer Antriebsseite 18 an einem Rahmenrohr, hier dem Unterrohr 7 zu befestigen. Wie dies geschieht ist weiter oben beispielhaft beschrieben, so dass eine entsprechende Darstellung in den Figuren 6 und 7, und eine nochmalige Beschreibung nicht notwendig erscheinen. Das trifft auch auf die nachfolgenden Figuren und Beispiele zu.

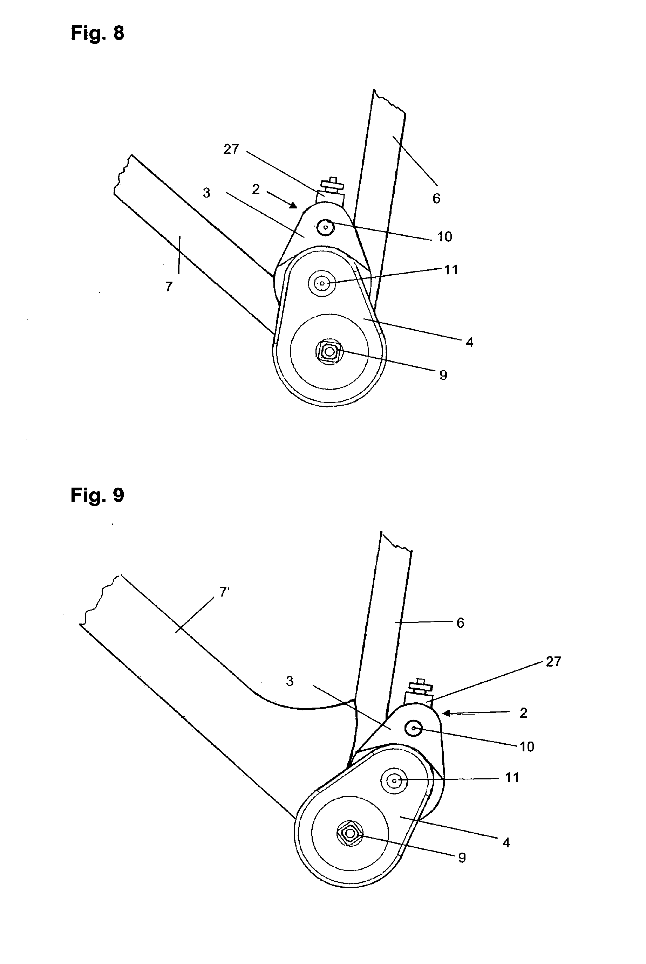

In manchen Fällen kann es gewünscht sein, die Antriebsachse 28 (in Figur 5 angedeutet) der Getriebeanordnung 1 parallel zum Sattelrohr auszurichten. Ein solcher Fall ist in Fig. 8 gezeigt. Die Einstellung der Teilgehäuse 2, 3, 4 und damit der Teilgetriebe zueinander erfolgt so, wie vorstehend in Verbindung mit den Figuren 6 und 7 beschrieben, so dass sich eine nochmalige Beschreibung erübrigt. Dies gilt auch für die nachfolgenden Beispiele.

Fig. 9 zeigt den Rahmen eines sogenannten Damenfahrrades, das üblicherweise kein Oberrohr zur Versteifung besitzt, sondern stattdessen ein verstärktes Unterrohr 7'. Da eine Befestigung an einem solchen Unterrohr 7' eine gesonderte Befestigungseinheit erfordern würde, kann, entsprechende Platzverhältnisse vorausgesetzt, auf eine Befestigung - in Fahrtrichtung gesehen - hinter dem Sattelrohr ausgewichen werden. Dazu sind wiederum die Teilgehäuse 2, 3, 4, wie oben in Verbindung mit den Figuren 6 und 7 beschrieben, nach Lösen der Spannmittel 10, 11 zu verschwenken, bis die gewünschte Orientierung erreicht ist. In der entsprechenden Lage durch Spannen der Spannmittel 10, 11 fixiert, kann dann die Getriebeanordnung 1 am Rahmen befestigt werden.

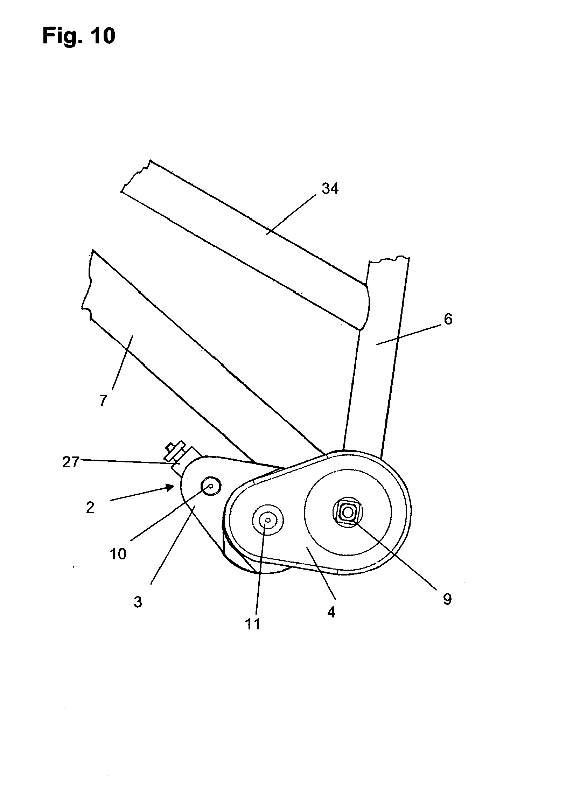

Liegen Verhältnisse vor, wie bei einem Mountainbike, muss die Getriebeanordnung 1 häufig unter dem Unterrohr 7 angeordnet werden, wie dies Fig. 10 zeigt. Bei Mountainbikes ist das Oberrohr üblicherweise sehr tief angeordnet, so dass zwischen Unterrohr, Oberrohr und Sattelrohr wenig Platz ist um den Hilfsantrieb dort anzuordnen. In einem solchen Fall sind die Teilgehäuse 2, 3, 4 nach Lösen der Spannmittel 10, 11 so zueinander einzustellen, dass die Antriebsachse 28 (in Figur 5 angedeutet) parallel zum Unterrohr unter diesem liegt. Die Befestigung der Getriebeanordnung 1 erfolgt dann mittels eines Befestigungselementes, das zwar in den Figuren nicht dargestellt ist, aber bereits weiter oben beispielhaft beschreiben wurde, wobei das Befestigungselement das erste Teilgehäuse 2 und damit die gesamte Getriebeabordnung 1 am Unterrohr 6 festlegt. Die Abtriebsseite der Getriebeanordnung 1, ist im montierten Zustand, wie bei allen Beispielen in den Figuren 6 bis 10, mittels des Adapters 9 auf der Tretkurbelaufnahme 8' (siehe Fig. 5a) fixiert und damit über das Tretlager ebenfalls am Rahmen befestigt.

Wie aus den vorstehenden Beispielen ersichtlich lässt sich die erfindungsgemäße Getriebeanordnung durch die verschiedenen Verstellmöglichkeiten auf die unterschiedlichsten Rahmen von tretkurbelgetriebenen Fahrzeugen, bevorzugt Fahrrädern einstellen.

### Bezugszeichenliste

- 1: Getriebeanordnung
- 2: erstes (antriebsseitiges) Teilgehäuse
- 2': erste Gehäusewanne
- 2": erster Gehäusedeckel
- 3: zweites (mittleres) Teilgehäuse
- 3': zweite Gehäusewanne
- 3": zweiter Gehäusedeckel
- 4: drittes (abtriebsseitiges) Teilgehäuse
- 4': dritte Gehäusewanne
- 4": dritter Gehäusedeckel
- 5: Tretlager
- 6: Sattelrohr (Teildarstellung)
- 7: Unterrohr (Teildarstellung)
- 7': verstärktes Unterrohr
- 8: erste Tretkurbelaufnahme
- 8': zweite Tretkurbelaufnahme
- 9: Adapter
- 9': Tretkurbelaufnahmeansatz
- 10: erstes Spannmittel
- 10': Bolzen
- 10": Schraube
- 10'": Bolzenkopf
- 10"": Innengewinde
- 11: zweites Spannmittel
- 10': Spannbolzen
- 10": Spannschraube
- 10'": Spannbolzenkopf
- 10"": Spannbolzeninnengewinde
- 12: Tretlagerwelle
- 13: Abtriebsrad
- 14: erstes Zwischenrad
- 14': erstes Rad
- 14": zweites Rad
- 14"': Ansatz
- 14"": Freilauf
- 15: zweites Zwischenrad
- 16: erste Drehachse
- 17: zweite Drehachse
- 18: Antriebsseite
- 19: Abtriebsseite
- 20: erste Ausnehmung
- 20': zweite Ausnehmung
- 21: Hohlwelle
- 22: erstes Lager
- 22': zweites Lager
- 23: Ring (mit Hirthverzahnung)
- 24: Hohlachse
- 25: Zwischenlage (den Reibschluss erhöhend)
- 26: Kopplungselement
- 27: Gehäuseansatz
- 28: Antriebswelle
- 29: Kegelradritzel
- 30: Tellerrad
- 31, 31': Wälzlager
- 32, 32': umlaufende Schulter
- 33: Drehachse
- 34: Oberrohr
- 201: Getriebeanordnung
- 202: erstes Teilgehäuse
- 202': erste Gehäusewanne
- 202": ersten Gehäusedeckel
- 203: zweites Teilgehäuse
- 203': zweite Gehäusewanne
- 203": zweiter Gehäusedeckel
- 204: drittes Teilgehäuse
- 204': dritte Gehäusewanne
- 204": dritter Gehäusedeckel
- 204"': Kragen
- 209: Adapter
- 209': Ausnehmung
- 209": Tretkurbelaufnahmeansatz
- 210: erstes Spannmittel
- 210': Gewindebohrung
- 210": Zugschraube
- 210"': Schraubenkopf
- 211: zweites Spannmittel
- 211': erste Spannschraube
- 211": zweite Spannschraube
- 213: Abtriebsrad
- 214: erstes Zwischenrad
- 214': erstes Rad (Kettenrad)
- 214": zweites Rad (Kettenrad)
- 215: zweites Zwischenrad (Kettenrad)
- 215': Sprengring
- 216: Drehachse (von 214)
- 217: Drehachse (von 215)
- 218: Antriebsseite
- 219: Abtriebsseite
- 220, 220': Ausnehmung
- 221: Hohlwelle
- 221': Freilauf
- 222: erstes Lager
- 222': zweites Lager
- 223: Kragen
- 223': Ring
- 223": erste Anlagefläche
- 224: Hohlachse
- 224': Durchgangsbohrung
- 225: zweite Anlagefläche
- 226: Kegelradaufnahme
- 227: Eingriffselement
- 228: Antriebswelle
- 229: Ritzel
- 230: Tellerrad
- 230': Zahnring
- 230": Zahnringträger
- 231, 231': Wälzlager
- 232, 232': umlaufende Schultern
- 233: Drehachse
- 234: Schraube
- 235, 235': Dichtung
- 236: Umgehäuse
- 237, 237': Deckel
- 238, 238': Wälzlager
- 239: erste Triebkette
- 240: Nadellager
- 241: zweite Triebkette
- 242: Rippen

## Patentansprüche

1. Getriebeanordnung für einen an einen Rahmen eines mittels Tretkurbel angetriebenen Fahrzeugs anbaubaren Hilfsantrieb, wobei der Hilfsantrieb wenigstens aus der Getriebeanordnung (1, 201) und einem Motor besteht und wobei die Abtriebsseite der Getriebeanordnung (1, 201) auf die Tretlagerwelle (12) des Fahrzeugs wirkt und wenigstens die Getriebeanordnung (1, 201) am Rahmen des Fahrzeugs befestigbar ist, **dadurch gekennzeichnet, dass** zur Anpassung des Hilfsantriebs an unterschiedliche Rahmen die Getriebeanordnung (1, 201) derart ausgebildet ist, dass der Abstand zwischen Abtriebsseite (19, 219) und Antriebsseite (18, 218) veränderbar ist, wobei im Endmontagezustand der Abstand zwischen Abtriebsseite (19, 219) und Antriebsseite (18, 218) fixierbar ist.

2. Getriebeanordnung nach Anspruch 1, **dadurch gekennzeichnet, dass** die Getriebeanordnung (1, 201) aus wenigstens zwei Teilgetrieben besteht und wenigstens eine Zwischenradanordnung (14-15, 214-215) aufweist, wobei die Zwischenradanordnung (14-15, 214-215) aus wenigstens einem Zwischenrad (14, 15, 214, 215) besteht und jeweils zwei Teilgetriebe direkt oder über Triebmittel (239) wirkverbindet, wobei die Drehachse (16, 17, 216, 217) wenigstens eines Zwischenrades (14, 15, 214,215) der Zwischenradanordnung (14-15, 214-215) als Schwenkachse ausgebildet ist, um die wenigstens eines der Teilgetriebe verschwenkbar ist, derart, dass durch das Verschwenken des wenigstens einen Teilgetriebes um die Schwenkachse der Abstand zwischen Abtriebsseite (19, 219) und Antriebsseite (18, 218) der Getriebeanordnung (1, 201) veränderbar ist und dass das wenigstens eine verschwenkbare Teilgetriebe in seinem Endmontagezustand relativ zur Schwenkachse fixierbar ist.

3. Getriebeanordnung nach Anspruch 2, **dadurch gekennzeichnet, dass** das wenigstens eine Teilgetriebe auf einem Träger oder in einem Teilgehäuse (2, 3, 4, 202, 203, 204) angeordnet ist und dass das Teilgetriebe mit dem Träger oder dem Teilgehäuse (2, 3, 4, 202, 203, 204) um die Schwenkachse verschwenkbar und in seinem Endmontagezustand relativ zu dieser fixierbar ist.

4. Getriebeanordnung nach Anspruch 3, **dadurch gekennzeichnet, dass** wenigstens ein zweites Teilgehäuse (3, 203) vorgesehen ist, wobei das zweite Teilgehäuse (3, 203) wenigstens Teile der Zwischenradanordnung (14-15, 214-215) aufnimmt und wobei wenigstens zwei benachbarte Teilgehäuse (2, 3, 202, 203 bzw. 3, 4, 203, 304) im Endmontagezustand mittels Spannmittel (10, 11, 210, 211) zueinander fixiert sind.

5. Getriebeanordnung nach einem der vorhergehenden Ansprüche, **dadurch gekennzeichnet, dass** die
- eine Zwischenradanordnung (14-15, 214-215) zwei Zwischenräder (14, 15, 214, 215) enthält und jedes davon mit einem Teilgetriebe direkt oder über Triebmittel (239, 241) zusammenwirkt,
- die Drehachse (16, 17, 216, 217) der zwei Zwischenräder (14, 15, 214, 215) jeweils als Schwenkachse ausgebildet ist, um die die Teilgetriebe verschwenkbar sind,
- mit der ersten Schwenkachse der Abstand zwischen der Abtriebsseite (19, 219) der Getriebeanordnung (1, 201) und der Antriebsseite (18, 218) einstellbar ist und
- mit der zweiten Schwenkachse die Winkellage der Antriebseite (18, 218) der Getriebeanordnung einstellbar ist.

6. Getriebeanordnung nach einem der vorhergehenden Ansprüche, **dadurch gekennzeichnet, dass** es sich bei der Getriebeanordnung (1) um einen Rädertrieb, einen Kettentrieb, einen Riementrieb oder eine beliebige Mischform daraus handelt.

7. Getriebeanordnung nach einem der vorhergehenden Ansprüche, **dadurch gekennzeichnet, dass** zumindest das Teilgehäuse (2, 202) der Antriebsseite (18, 218) direkt oder indirekt an dem Rahmen des Fahrzeugs festlegbar ist.

8. Getriebeanordnung nach einem der vorhergehenden Ansprüche, **dadurch gekennzeichnet, dass** die Abtriebsseite (19, 219) der Getriebeanordnung (1, 201) einen Adapter (9, 209) aufweist, der derart ausgebildet ist, dass dieser einerseits an Stelle einer Tretkurbel an der Tretlagerwelle (12) des Fahrzeugs befestigbar ist und der andererseits so ausgebildet ist, dass eine Tretkurbel an dem Adapter (9, 209) koaxial zu einer Drehachse (33, 233) der Tretlagerwelle 12 befestigbar ist.

9. Getriebeanordnung nach einem der vorhergehenden Ansprüche, **dadurch gekennzeichnet, dass** die Antriebsseite (18, 218) der Getriebeanordnung (1, 201) als Winkeltrieb ausgebildet ist, derart, dass der Winkeltrieb die Rotationsachse um einen vorgegebenen Winkel, vorzugsweise um 90° dreht.

10. Getriebeanordnung nach einem der Ansprüche 3 bis 9, **dadurch gekennzeichnet, dass** das wenigstens eine Zwischenrad (14, 15, 214, 215) auf einer im Gehäuse der Getriebeanordnung (1, 201) gelagerten Hohlwelle (21, 221) oder Hohlachse (24, 224) angeordnet ist und dass Spannmittel (10, 11, 210, 211) vorgesehen sind, die axial zur Hohlwelle (21, 221) oder Hohlachse (24, 224) wirken, derart, dass jeweils zwei benachbarte Teilgehäuse (2, 3, 202, 203 bzw. 3, 4, 203, 204) relativ zueinander festlegbar sind.

11. Getriebeanordnung nach einem der vorhergehenden Ansprüche, **dadurch gekennzeichnet, dass** die Getriebeanordnung (1) wenigstens zwei Spuren aufweist, wobei die Antriebsseite (18, 218) in einer ersten Spur und die Abtriebsseite (19, 219) in einer zweiten, von der ersten unterschiedlichen Spur angeordnet ist und dass die Zwischenradanordnung (14-15, 214-215) derart ausgebildet ist, dass diese den Übergang von der ersten Spur in die zweite Spur bewirkt.

12. Getriebeanordnung nach Anspruch 11, **dadurch gekennzeichnet, dass** wenigstens ein Zwischenrad (14, 15, 214, 215) der Zwischenradanordnung (14-15, 214-215) als Doppelrad ausgebildet ist.

13. Getriebeanordnung nach einem der Ansprüche 11, 12, **dadurch gekennzeichnet, dass** die Spuren so zueinander angeordnet sind, dass die Getriebeanordnung (1, 201) den Abstand zwischen dem Angriffspunkt der Getriebeanordnung (1, 201) am Tretlager (5) und dem Befestigungspunkt der Antriebsseite (18, 218) der Getriebeanordnung (1, 201) am Rahmen des Fahrzeugs überbrückt.

14. Getriebeanordnung nach einem der vorhergehenden Ansprüche, **dadurch gekennzeichnet, dass** der Hilfsantrieb als Nachrüstsatz konzipiert ist.
